**Europäisches Patentamt**

(19) **European Patent Office**

**Office européen des brevets**

(11) Veröffentlichungsnummer: **0 122 406**

**A2**

(12) # EUROPÄISCHE PATENTANMELDUNG

(21) Anmeldenummer: **84101841.9**

(51) Int. Cl.³: **G 02 B 7/11**

(22) Anmeldetag: **22.02.84**

(30) Priorität: **12.03.83 DE 3308851**

(43) Veröffentlichungstag der Anmeldung:
**24.10.84 Patentblatt 84/43**

(84) Benannte Vertragsstaaten:
**AT BE CH FR GB LI**

(71) Anmelder: **Kernforschungszentrum Karlsruhe GmbH**
**Weberstrasse 5**
**D-7500 Karlsruhe 1(DE)**

(72) Erfinder: **Vollath, Dieter, Dr.**
**Primelweg 3**
**D-7513 Stutensee-Fr.(DE)**

(54) **Verfahren und Einrichtung zum automatischen Fokussieren.**

(57) Zum automatischen Fokussieren eines Bildes wird von der Helligkeitsverteilung von Bildpunkten ein Fokussiersignal abgeleitet.

Ein nulltes Bildelement $B_0(i, j)$ des zu fokussierenden Bildes wird elektronisch um einen ersten Betrag $i = o$ oder $i = 1$ in x-Richtung und um einen zweiten Betrag $j = o$ oder $j = 1$ in y-Richtung verschoben.

Jedes der Verschiebebilder $B_0(I,O)$; $B_0(I,I)$; $B_0(O,I)$ schneidet das nullte Bildelement $B_0(i, j)$ so daß drei Bildelemente $B_1 = B_0 \cap B_0(I,O)$, $B_2 = B_0 \cap B_0(I,I)$ $B_3 = B_0 \cap B_0(O,I)$ entstehen. Aus den gemessenen Flächen $F_0$, $F_1$, $F_2$, $F_3$ wird eine Kenngröße

$$K = \frac{F_0 - (F_1 + F_2 + F_3)/3}{F_0}$$

abgeleitet und zum Fokussieren deren Maximum eingestellt.

Die Verschiebungsbilder werden mit Hilfe elektronischer Speicher und einem Rechner erzeugt und die Bildpunktsignale der Bilderelemente $F_0$, $F_1$, $F_2$, $F_3$ mit Zählern gezählt und mit dem Rechner die Kenngröße K bestimmt und maximiert.

Vorteilhaft ist insbesondere, daß die Kenngröße K aus nur einem in dem Interessierenden Grauwertbereich liegenden Grauwertauszug bestimmt wird, und daß die erforderliche Einrichtung extrem kostengünstig ist.

Fig. 1a  Fig. 1b  Fig. 1c  Fig. 1d

- 1 -

Verfahren und Einrichtung zum automatischen Fokussieren.

Die Erfindung betrifft ein Verfahren und eine Einrichtung zum automatischen Fokussieren nach dem Oberbegriff des Anspruches 1.

Bei der automatischen Analyse von Mikroskopbildern ist es häufig erforderlich, die Fokussierung am Mikroskop nachzustellen, weil infolge unterschiedlicher Dicke der Präparate und/oder der diese aufnehmenden Platten insbesondere beim Verschieben des Präparates unter dem Objektiv des Mikroskopes ständig Bildunschärfen auftreten, die das Ergebnis einer Analyse beeinträchtigen oder infrage stellen können.

Ein Fokussieren von Hand scheidet aus, weil dadurch eine sinnvolle Nutzung der Einrichtung zur automatischen Analyse ausgeschlossen würde.

Das Problem der automatischen Fokussierung ist jedoch nicht auf die Mikroskopie beschränkt, in diesem Bereich werden aber die höchsten Anforderungen gestellt. Das beanspruchte Verfahren kann grundsätzlich bei jedem bilderzeugenden oder abbildenden System verwendet werden.

Es ist ein Verfahren zum automatischen Fokussieren bekannt (DE-OS 29 10 875), bei dem von der Autokorrelationsfunktion der Helligkeitsverteilung des Bildes an einer vorbestimmten Stelle der Mittelwert der Auto-

- 2 -

korrelationsfunktion abgezogen und dieser Wert durch
den Mittelwert der Autokorrelationsfunktion dividiert
und das Maximum der so gewonnenen normierten Funktion
iterativ durch Änderung der Fokussierung aufgesucht
wird.

Der Erfindung liegt die Aufgabe zugrunde, dieses bekannte Verfahren weiterzuentwickeln und so zu vereinfachen, daß dessen Durchführung mit einer nur geringen Aufwand erfordernden Einrichtung möglich ist.

Diese Aufgabe wird bei einem Verfahren und einer Einrichtung zum automatischen Fokussieren nach dem Oberbegriff des Anspruches 1 durch die in dessen Kennzeichen und im Kennzeichen des Anspruches 5 genannten Merkmale gelöst.

Die mit dem vorgeschlagenen Verfahren und den zu dessen Durchführung entwickelten Einrichtungen erzielten Vorteile bestehen insbesondere darin, daß die Kenngrösse K, von der das Fokussiersignal abgeleitet wird, aus nur einem Grauwertauszug bestimmt wird, der zudem so gelegt werden kann, daß bei der Auswertung ausschließlich der interessierende Grauwertbereich verwendet wird. Die vorgeschlagenen Maßnahmen können mit einer extrem kostengünstigen Einrichtung realisiert werden da die vollständige Digitalisierung des Fernsehbildes entfällt.

Das vorgeschlagene Verfahren und die Einrichtungen zu dessen Durchführung werden anhand der Zeichnung im folgenden näher beschrieben.

Es zeigen

Fig. 1    eine schematische Darstellung der Flächenbestimmung,

Fig. 2    Blockschaltbild einer Fokussiereinrichtung,

Fig. 3    Blockschaltbild einer ersten Signalververarbeitung,

Fig. 4    Blockschaltbild einer zweiten Signalverarbeitung

Fig. 5    Blockschaltbild einer dritten Signalverarbeitung.

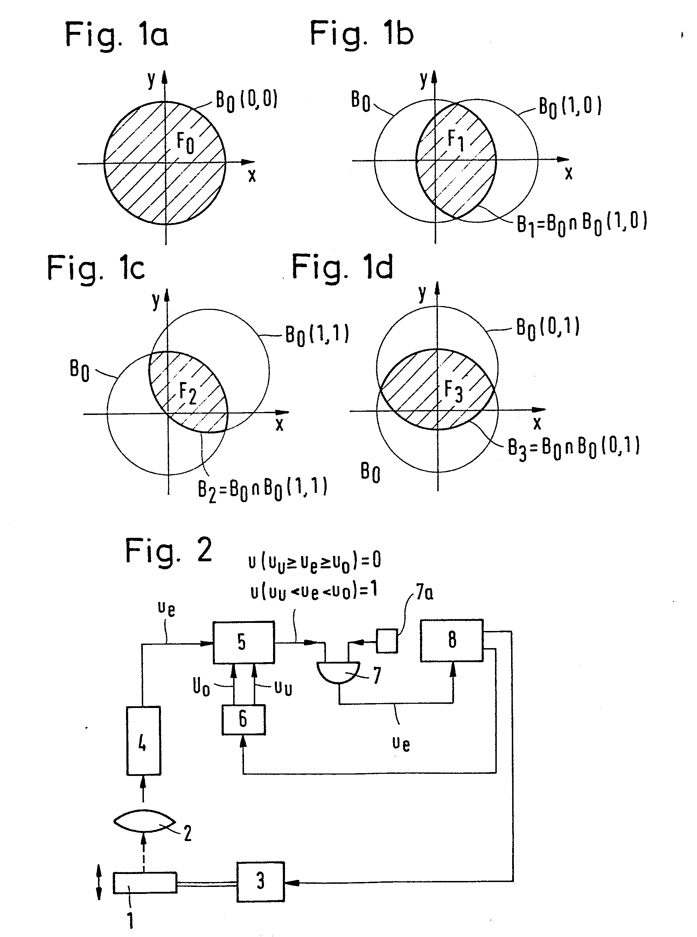

Das vorgeschlagene Verfahren zum automatischen Fokussieren eines Bildes mit einem von der Helligkeitsverteilung von Bildpunkten dieses Bildes abgeleiteten
Fokussiersignal beruht im wesentlichen darauf, daß
zunächst ein nulltes binäres Bild $B_o(0, 0)$ mit dem
Verschiebungsvektor $x = 0$ und $y = 0$ bestimmt wird,
wie in Fig. 1a dargestellt. Wenn ein weiteres Bild
hergestellt wird, das gegenüber dem Ausgangsbild
$B_o(0, 0)$ um $x = i$ und $y = j$ verschoben ist, so wird
dies als $B_o(i, j)$ symbolisch dargestellt.

Das nullte Bild $B_o$ wird elektronisch um einen ersten
Betrag $i = o$ oder $i = 1$ in Richtung der x-Achse und

- 4 -

um einen zweiten Betrag $j = o$ oder $j = 1$ in Richtung der y-Achse verschoben. Jedes der Verschiebungsbilder $B_o(1,0)$, $B_o(1,1)$ und $B_o(0,1)$ wird zur Herstellung einer Schnittmenge mit dem Bild $B_o(0, 0)$ verknüpft und erzeugt dadurch ein erstes Bild $B_1 = B_o \cap B_o(1,0)$ gemäß Fig. 1b, ein zweites Bild $B_2 = B_o \cap B_o(1,1)$ gemäß Fig. 1c und ein drittes Bild $B_3 = B_o \cap B_o(0,1)$ gemäß Fig. 1d.

Die Fläche $F_o = F(B_o)$ des nullten Bildes $B_o(0,0)$ und die dem nullten Bild $B_o$ und den Bildern $B_1$, $B_2$, $B_3$ gemeinsamen Flächen $F_1 = F(B_1)$, $F_2 = F(B_2)$, $F_3 = F(B_3)$ werden ermittelt. Das kann in besonders einfacher Weise durch elektronisches Zählen der jeden dieser Bilder zugeordneten Bildpunkte erfolgen.

Das Blockschaltbild einer Fokussiereinrichtung, mit der das vorgeschlagene Verfahren ausführbar ist, zeigt Fig. 2.

Der Probenträger 1 eines Mikroskopes 2 ist zum Fokussieren durch einen Schrittmotor 3 verstellbar ausgebildet. Das im Mikroskop 2 sichtbare Bild der Probe wird von einer TV-Kamera 4 in die Bildpunkte eines Bildrasters zerlegt und für jeden der Bildpunkte eine der mittleren Leuchtdichte dieses Bildpunktes entsprechende analoge Signalspannung $u_e$ erzeugt.

Der TV-Kamera ist ein Komparator 5 nachgeschaltet, an den ein Schwellwertgeber 6 zum voneinander unabhängigen Einstellen eines oberen und eines unteren Schwellwertes $u_o$; $u_u$ des Bildpunktsignales $u_e$ angeschlossen ist. Der ausschließlich bei einer zwischen den Schwellwerten liegenden analogen Eingangsspannung $u_u < u_e < u_o$ den Wert 1 oder keine Spannung führende Ausgang des Komparators 5 ist auf den ersten Eingang eines UND-Gatters 7 geschaltet, dessen zweiter Eingang mit einem Taktgeber 7a verbunden ist.

Der Ausgang des UND-Gatters 7 führt ein Nullsignal oder ein digitalisiertes Bildpunktsignal $\bar{u}_e$, das zur weiteren Verarbeitung der Signalverarbeitungseinheit 8 zugeführt wird, die ihrerseits ein erstes Steuersignal für das Takten der Bildpunktsignale und ein zweites Steuersignal für den Antrieb des Schrittmotors 3 erzeugt.

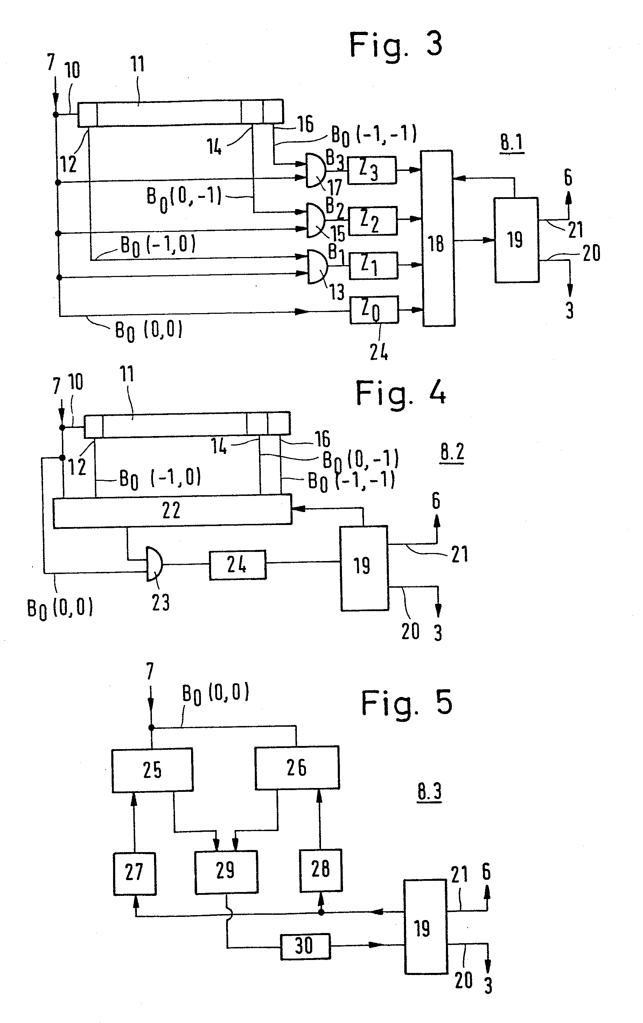

Für die Signalverarbeitungseinheit 8 werden drei Ausführungen vorgeschlagen, die in den Figuren 3,4 und 5 dargestellt sind.

Fig. 3 zeigt das Blockschaltbild einer ersten Signalverarbeitungseinheit 8.1. Der die digitalisierten Bildpunktsignale $\bar{u}_e$ des nullten Bildes $B_o(0, 0)$ führende Ausgang des UND-Gatters 7 ist auf den Signaleingang 10 eines Schieberegisters 11 mit n+2 Speicherzellen geschaltet, wobei n die Zahl der Bildpunkte in einer Zeile des nullten Bildes $B_o$ ist.

An einen vorbestimmten ersten Ausgang 12 des Schieberegisters 11, der ein erstes gegenüber dem Bildsignal $B_o(0, 0)$ zeitlich verzögertes Bildsignal $B_o(-1, 0)$ führt, ist der erste Eingang eines ersten UND-Gatters 13 angeschlossen.

An einen vorbestimmten zweiten Ausgang 14 des Schieberegisters 11, der ein zweites gegenüber dem Bildsignal $B_o(0, 0)$ zeitlich verzögertes Bildsignal $B_o(0, -1)$ führt, ist der erste Eingang eines zweiten UND-Gatters 15 angeschlossen.

An einen vorbestimmten dritten Ausgang 16 des Schieberegisters 11, der ein drittes gegenüber dem Bildsignal $B_o(0, 0)$ zeitlich verzögertes Bildsignal $B_o(-1, -1)$ führt, ist der erste Eingang eines dritten UND-Gatters 17 angeschlossen.

Die zweiten Eingänge des ersten bis dritten UND-Gatters 13, 15, 17 sind mit dem Signaleingang 10 des Schieberegisters 11 verbunden. Auf die Ausgänge des ersten bis dritten UND-Gatters 13, 15, 17 ist jeweils ein erster, zweiter oder dritter Zähler $Z_1$, $Z_2$, $Z_3$ geschaltet, ein nullter Zähler $Z_o$ ist direkt mit dem Signaleingang 10 des Schieberegisters 11 verbunden. Den Zählern $Z_o$, $Z_1$, $Z_2$, $Z_3$ ist ein die Ausgänge der Zähler zeitlich nacheinander auf einen Rechner 19 schaltender Multiplexer 18 nachgeschaltet.

Der Rechner 19 bestimmt aus den in den Zählern gespeicherten Zahlen der Bildpunkte die Kenngröße

$$K = \frac{Z_0 - (Z_1 + Z_2 + Z_3)/3}{Z_0}$$

und maximiert diese Kenngröße durch von der Kenngröße $K$ abgeleitete Steuersignale, die über den Ausgang 20 des Rechners 19 auf den Schrittmotor 3 gegeben werden und dessen Drehrichtung und Laufzeit bestimmen. Ein das Taktsignal führender zweiter Ausgang 21 des Rechners 19 ist auf die Einstellung der Referenzspannungen des Komparators 5 bewirkenden Schwellwertgeber 6 geschaltet.

Die Signalverarbeitungseinheit 8.1 ermöglicht die automatische Fokussierung nach einmaliger Eingabe aller zu einem nullten Bildelement $B_0(0, 0)$ gehörenden Bildpunktsignale.

Mit noch geringerem Schaltungsaufwand ist die in Fig. 4 gezeigte zweite Signalverarbeitungseinheit 8.2 realisiert, bei welcher der die digitalisierten Bildsignale $\bar{u}_e$ des nullten Bildes $B_0(0, 0)$ führende Ausgang des UND-Gatters 7 auf den Signaleingang 10 des Schieberegisters 11 geschaltet ist und vorbestimmte erste bis dritte Ausgänge 12, 14, 16 des Schieberegisters 11, welche gegenüber dem unverzögerten Bildsignal $B_0(0,0)$ zeitlich verzögerte Bildsignale $B_0(-1, 0)$; $B_0(0, -1)$; $B_0(-1, -1)$ führen, auf den Eingang 10 eines Multiplexer 22 geschaltet sind

Der Ausgang des UND-Gatters 7 ist ferner direkt auf den Multiplexer 22 und einen zweiten Eingang eines vierten UND-Gatters 23 geschaltet, dessen erster Eingang mit dem Ausgang des Multiplexers 22 und dessen Ausgang auf einen Zähler 24 geschaltet ist. Der Rechner 19 erzeugt aus den Zählimpulsen wie bei Fig. 3 erläutert eine Kenngröße K und steuert über seinen ersten Ausgang 20 den Schrittmotor 3 und über seinen zweiten Ausgang 21 und den Schwellwertgeber 6 die Einstellung der Referenzspannungen des Komparators 5.

Da der Multiplexer 22 den Ausgang des UND-Gatters 7 und die diskreten Ausgänge 12, 14, 16 des Schieberegisters 11 zeitlich nacheinander auf seinen Ausgang durchschaltet, ist die viermalige Eingabe der Bildpunktsignale des nullten Bildes $B_o$ erforderlich.

Eine dritte Signalverarbeitungseinheit 8.3 zeigt die Fig. 5.

Dabei sind ein erster und ein zweiter Binärspeicher 25, 26 zum Speichern der Bildpunktsignale eines nullten Bildelementes $B_o$ eingangsseitig einander parallel auf den Ausgang des UND-Gatters 7 geschaltet.

Zum löschungsfreien Lesen von in vorbestimmten Speicherplätzen der Binärspeicher 25, 26 gespeicherten Informationen der Bildpunkte des nullten Bildes $B_o$ ist auf jeden der Binärspeicher 25, 26 je ein erster oder zweiter Adressgenerator 27, 28 geschaltet. Die Signalausgänge der Binärspeicher 25, 26 sind mit einer die Bildpunktsignale der Bilder $B_o$, $B_1$, $B_2$, $B_3$ zeitlich nacheinander verknüpfenden Logikeinheit 29 verbunden, deren Ausgang auf einen Zähler 30 geschaltet ist. Die Ver-

schiebungen des Bildes $B_O(O, O)$ zur Erzeugung des verschobenen Bildes $B_O(i, j)$ erfolgt mit Hilfe der Adressgeneratoren 27, 28, die vom Rechner 19 gesteuert werden. Dem Zähler 30 ist der die Kenngröße K bestimmende und dessen Maximalwert einstellende Rechner 19 nachgeschaltet, dessen erster Ausgang 20 auf den die Fokussierung bewirkenden Schrittmotor 3 und dessen zweiter Ausgang 21 zur Einstellung der Referenzspannung des Komparators 5 auf den Schwellwertgeber 6 geschaltet ist.

Auch diese Schaltung erfordert den viermaligen Durchlauf der Bildpunktsignale eines nullten Bildes $B_O$. Da dieses Bild aber in den Bildspeichern 25 und 26 gespeichert ist, ist die Aufnahme und Binärisierung des Bildes der TV-Kamera nur einmal notwendig.

Bezugszeichenliste:

| Fig. 1 | | $\bar{u}_e$ | binärisiertes Bildpunktsignal |
|---|---|---|---|
| $B_o$ | nulltes Bild | 7a | Taktgeber |
| i | Verschiebung in x-Richtung | **Fig. 3** | |
| j | Verschiebung in y-Richtung | 8.1 | 1.Signalverarbeitungseinheit |
| $B_1$ | 1.Bild | 10 | Signaleingang von 11 |
| $B_2$ | 2.Bild | 11 | Schieberegister |
| $B_3$ | 3.Bild | 12 | 1.Ausgang von 11 |
| $F_o$ | Fläche von $B_o$ | 13 | 1.UND-Gatter in 8.1 |
| $F_1$ | Fläche von $B_1$ | 14 | 2.Ausgang von 11 |
| $F_2$ | Fläche von $B_2$ | 15 | 2.UND-Gatter in 8.1 |
| $F_3$ | Fläche von $B_3$ | 16 | 3.Ausgang von 11 |
| | | 17 | 3.UND-Gatter in 8.1 |
| **Fig. 2** | | $Z_o$ | Zähler für Bildpunktsignale von $B_o$ |
| 1 | Probenträger | $Z_1$ | Zähler für Bildpunktsignale von $B_1$ |
| 2 | Mikroskop | | |
| 3 | Schrittmotor | $Z_2$ | Zähler für Bildpunktsignale von $B_2$ |
| 4 | TV-Kamera | | |
| $u_e$ | analoges Bildpunktsignal | $Z_3$ | Zähler für Bildpunktsignale von $B_3$ |
| 5 | Komparator | 18 | Multiplexer |
| 6 | Schwellwertgeber | 19 | Rechner |
| $u_o$ | oberer Schwellwert | 20 | 1.Ausgang von 19, liegt an 3 |
| $u_u$ | unterer Schwellwert | | |
| 7 | UND-Gatter | 21 | 2.Ausgang von 19, liegt an 6 |
| 8 | Signalverarbeitungseinheit | n | Zahl der Bildpunkte in $B_o$ |

**Fig. 4**

| | |
|---|---|
| 8.2 | 2.Signalverarbei-<br>tungseinheit |
| 22 | Multiplexer |
| 23 | 4.UND-Gatter in 8.2 |
| 24 | Zähler in 8.2 |

**Fig. 5**

| | |
|---|---|
| 25 | 1.Binärspeicher |
| 26 | 2.Binärspeicher |
| 27 | 1.Adressgenerator |
| 28 | 2.Adressgenerator |
| 29 | Logikeinheit |
| 30 | Zähler in 8.3 |

– 1 –

J

Kernforschungszentrum
Karlsruhe GmbH
ANR 1oo2597

Karlsruhe, den 7.März 83
PLA 8310 Hä/he

Patentansprüche:

1. Verfahren zum automatischen Fokussieren eines Bildes mit einem von der Helligkeitsverteilung von Bildpunkten abgeleiteten Fokussiersignal, gekennzeichnet durch folgende Merkmale,

a) ein nulltes Binärbild ($B_0(i, j)$, $i = 0$, $j = 0$) des zu fokussierenden Bildes wird als Binärauszug aus einem Grauwertbild bestimmt und elektronisch um einen ersten Betrag ($i = 0$ oder $i = 1$) in Richtung der x-Achse und um einen zweiten Betrag ($j = 0$ oder $j = 1$) in Richtung der y-Achse verschoben,

b) jedes der Verschiebungsbilder ($B_0(1,0)$; $B_0(1,1)$; $B_0(0,1)$) schneidet das Originalbild ($B_0(0, 0)$) und erzeugt dadurch ein erstes Bild ($B_1 = B_0(0, 0) \cap B_0(1,0)$) ein zweites Bild ($B_2 = B_0(0, 0) \cap B_0(1,1)$) und ein drittes Bild ($B_3 = B_0(0, 0) \cap B_0(0,1)$),

c) als Meßgrößen werden die Flächen ($F_0 = F(B_0)$) des nullten Bildes ($B_0$) und die dem nullten Bild ($B_0$) und jeweils einem der ersten bis dritten Bilder ($B_1$, $B_2$, $B_3$) gemeinsamen Bildflächen ($F_1 = F(B_1)$; $F_2 = F(B_2)$; $F_3 = F(B_3)$) bestimmt,

- 2 -

d) aus den Meßgrößen der Flächen ($F_0$, $F_1$, $F_2$, $F_3$) der Bildelemente wird eine Kenngröße

$$K = \frac{F_0 - (F_1 + F_2 + F_3)/3}{F_0} \quad \text{ermittelt,}$$

e) zum Fokussieren des Bildes wird das Maximum der Kenngröße (K) eingestellt.

2. Verfahren nach Anspruch 1, dadurch gekennzeichnet, daß die die Meßgröße darstellenden Flächen ($F_0$, $F_1$, $F_2$, $F_3$) der Bilder durch Zählen der jedem dieser Bilder zugeordneten Bildpunkte bestimmt werden.

3. Verfahren nach Anspruch 1, dadurch gekennzeichnet, daß die das Fokussier-Signal bestimmende Kenngröße als nichtnormierte Größe ($K' = F_0 - (F_1 + F_2 + F_3)/3$ verwendet wird.

4. Verfahren nach Anspruch 1, dadurch gekennzeichnet, daß das Fokussiersignal von dem Betrag des Differentialquotienten $\left|\frac{du}{dt}\right|$ oder $\left|\frac{du}{dt}\right|^2$ des analogen Bildsignales abgeleitet wird.

5. Einrichtung zum Durchführen des Verfahrens nach Anspruch 1 mit einem Mikroskop (2) oder eine anderen bilderzeugenden Einrichtung, dessen Probenträger (1) zum Fokussieren durch einen Schrittmotor (3) verstellbar ist, mit einer TV-Kamera (4) zum Zerlegen des Mikroskopbildes in die Bildpunkte eines Bildraters und zum Erzeugen einer der mittleren Leuchtdichte eines Bildpunktes entsprechenden Signalspannung für jeden der Bildpunkte, gekennzeichnet durch folgende Merkmale,

a) der eine analoge Signalspannung ($u_e$) führende Signalausgang der TV-Kamera (4) ist auf einen Komparator (5) geschaltet,

b) an dem Komparator (5) ist ein oberer Schwellwert ($u_e$) und unabhängig von diesem ein unterer Schwellwert ($u_u$) einstellbar,

c) der ausschließlich bei einer zwischen den Schwellwerten liegenden analogen Eingangsspannung ($u_u < u_e < u_o$) den Wert 1 oder keine Spannung führende Ausgang des Komparators (5) ist auf einen ersten Eingang eines UND-Gatters (7) geschaltet, dessen zweiter Eingang auf einen Taktgeber (7a) geschaltet ist,

d) der ein Nullsignal oder ein Bildpunktsignal ($\overline{u}_e$) führende Ausgang des UND-Gatters (7) ist auf den Eingang einer Signalverarbeitung (8) geschaltet,

e) die ein erstes Steuersignal für das Takten der Bildpunktsignale und ein zweites Steuersignal für den Antrieb des Schrittmotors (3) erzeugende Signalverarbeitungseinheit (8) besteht im wesentlichen aus folgenden Bauteilen,

α) einem Schieberegister (11) oder einem oder mehreren Binärspeichern (25, 26) zum Speichern der digitalisierten Bildpunktsignale,

- 4 -

β) einem oder mehreren Zählern ($Z_0$, $Z_1$, $Z_2$, $Z_3$, 24, 30) zum Zählen der Bildpunktsignale des nullten Bildes ($B_0$) und der durch Verschieben des nullten Bildes ($B_0$) in Richtung der x- und/oder y-Achse erzeugten benachbarten Bilder ($B_1$; $B_2$; $B_3$),

γ) einem den Zählern nachgeschalteten Rechner (19) zum Bestimmen der Kenngröße

$$K = \frac{Z_0 - (Z_1 + Z_2 + Z_3)/3}{Z_0}$$

und zum Einstellen des Maximalwertes der Kenngröße.

6. Einrichtung nach Anspruch 5 mit einer ersten Signalverarbeitungseinheit (8.1), gekennzeichnet durch folgende Merkmale,

a) der die binärisierten Bildpunktsignale ($\bar{u}_e$) des nullten Bildes ($B_0(0, 0)$ führende Ausgang des UND-Gatters (7) ist auf den Signaleingang (10) eines Schieberegisters (11) geschaltet,

b) an einen vorbestimmten ersten Ausgang (12) des Schieberegisters (11), der ein erstes gegenüber dem Bildsignal ($B_0(0, 0)$ zeitlich verzögertes Bildsignal ($B_0(-1; 0)$) führt, ist der erste Eingang eines ersten UND-Gatters (13) angeschlossen,

c) an einen vorbestimmten zweiten Ausgang (14) des Schieberegisters (11), der ein zweites gegenüber dem Bildsignal ($B_0(0, 0)$) zeitlich verzögertes Bildsignal ($B_0(0, -1)$) führt, ist der erste Eingang eines zweiten UND-Gatters (15) angeschlossen,

- 5 -

d) an einen vorbestimmten dritten Ausgang (16) des Schieberegisters (11), der an ein drittes gegenüber dem Bildsignal ($B_0(0, 0)$) zeitlich verzögertes Bildsignal ($B_0(-1; -1)$) führt, ist der erste Eingang eines dritten UND-Gatters (17) angeschlossen,

e) die zweiten Eingänge des ersten bis dritten UND-Gatters (13, 15, 17) sind mit dem Signaleingang (10) des Schieberegisters (11) verbunden,

f) auf die Ausgänge des ersten bis dritten UND-Gatters (13, 15, 17) ist jeweils ein erster, zweiter oder dritter Zähler ($Z_1$; $Z_2$; $Z_3$) geschaltet, ein nullter Zähler ($Z_0$) ist mit dem Signaleingang (10) des Schieberegisters (11) verbunden,

g) den Zählern ($Z_0$; $Z_1$; $Z_2$; $Z_3$) ist ein die Ausgänge der Zähler zeitlich nacheinander auf den Rechner (19) schaltender Multiplexer (18) nachgeschaltet,

h) ein erster Ausgang (20) des die Kenngröße

$$K = \frac{Z_0 - (Z_1 + Z_2 + Z_3)/3}{Z_0}$$

bestimmenden und dessen Maximalwert einstellenden Rechners (19) ist auf den die Fokussierung bewirkenden Schrittmotor (3) und ein zweiter Ausgang (21) des Rechners (19) ist auf einen die Einstellung der Referenzspannungen des Komparators (5) bewirkenden Schwellwertgeber (6) geschaltet.

7. Einrichtung nach Anspruch 5, mit einer zweiten Signalverarbeitungseinheit (8.2), gekennzeichnet durch folgende Merkmale,

a) der die binärisierten Bildpunktsignale ($\bar{u}_e$) des nullten Bildelementes ($B_o(0, 0)$) führende Ausgang des UND-Gatters (7) ist auf den Signaleingang (10) des Schieberegisters (11), einen Eingang eines dem Schieberegister nachgeschalteten Multiplexers (22) und einen zweiten Eingang eines vierten UND-Gatters (23) geschaltet, dessen erster Eingang mit dem Ausgang des Multiplexers (22) verbunden ist,

b) je ein vorbestimmter erster, zweiter oder dritter Ausgang (12, 14, 16), der jeweils ein gegenüber dem Bildsignal ($B_o(0, 0)$) zeitlich verzögertes Bildsignal ($B_o(-1, 0)$ oder $B_o(0, -1)$ oder $B_o(-1; -1)$) führt, ist auf den Multiplexer (22) geschaltet,

c) die Ausgänge (12, 14, 16) des Schieberegisters (11) sind mit dem Multiplexer (22) nacheinander auf den ersten Eingang des vierten UND-Gatters (23) schaltbar, dessen zweiter Eingang auf den Ausgang des UND-Gatters (7) geschaltet ist,

d) auf den Ausgang des vierten UND-Gatters (23) ist ein die Bildpunktsignale jedes der vier Bilder ($B_o$; $B_1$; $B_2$; $B_3$) zählenden Zähler (24) geschaltet,

e) ein erster Ausgang (20) des die Kenngröße

$$K = \frac{Z_o - (Z_1 + Z_2 + Z_3)/3}{Z_o}$$

- 7 -

bestimmenden und dessen Maximalwert einstellenden Rechners (19) ist auf den die Fokussierung bewirkenden Schrittmotor (3) und ein zweiter Ausgang (21) des Rechners (19) ist auf einen die Einstellung der Referenzspannung des Komparators (5) bewirkenden Schwellwertgeber (6) geschaltet.

8. Einrichtung nach Anspruch 5, mit einer dritten Signalverarbeitungseinheit (8.3), gekennzeichnet durch folgende Merkmale,

a) ein erster Binärspeicher (25) und ein zweiter Binärspeicher (26) zum Speichern der digitalen Bildpunktsignale eines nullten Bildelementes $(B_o)$ sind eingangsseitig einander parallel auf den Ausgang des UND-Gatters (7) geschaltet,

b) auf den ersten Binärspeicher (25) ist ein erster Adressgenerator (27) und auf den zweiten Binärspeicher (26) ist ein zweiter Adressgenerator (28) zum löschungsfreien Lesen von in vorbestimmten Speicherplätzen der Binärspeicher (25, 26) gespeicherten Informationen der Bildpunkte des nullten Bildelementes $(B_o)$, also zum Erzeugen von Verschiebungsbildern, geschaltet,

c) die Signalausgänge des ersten und des zweiten Binärspeichers (25, 26) sind auf eine die Bildpunktsignale des nullten Bildes $(B_o)$ und der diesem benachbarten Bilder $(B_1; B_2; B_3)$ verknüpfenden Logikeinheit (29) geschaltet,

d) dem Ausgang der Logikeinheit (29) ist ein die Bildpunktsignale jedes der vier Bilder $(B_o; B_1; B_2; B_3)$ zählenden Zähler (30) nachgeschaltet,

e) dem Zähler (3o) ist ein die Kenngröße (K) be-

- 8 -

bestimmender und dessen Maximalwert einstellender Rechner (19) nachgeschaltet, dessen erster Ausgang (2o) auf den die Fokussierung bewirkenden Schrittmotor (3) und dessen zweiter Ausgang (21) auf einen die Einstellung der Referenzspannung des Komparators (5) bewirkenden Schwellwertgeber (6).

Fig. 1a

$B_0(0,0)$, $F_0$

Fig. 1b

$B_0$, $B_0(1,0)$, $F_1$, $B_1 = B_0 \cap B_0(1,0)$

Fig. 1c

$B_0(1,1)$, $B_0$, $F_2$, $B_2 = B_0 \cap B_0(1,1)$

Fig. 1d

$B_0(0,1)$, $F_3$, $B_3 = B_0 \cap B_0(0,1)$, $B_0$

Fig. 2

$$\upsilon(\upsilon_U \geq \upsilon_e \geq \upsilon_0) = 0$$
$$\upsilon(\upsilon_U < \upsilon_e < \upsilon_0) = 1$$

PLA 8310

0122406

## Fig. 3

## Fig. 4

## Fig. 5